# EUROPÄISCHE PATENTSCHRIFT

(11) **EP 1 514 709 B1**
(45) Veröffentlichungstag und Bekanntmachung des Hinweises auf die Patenterteilung: **30.06.2010**
(21) Anmeldenummer: 04021335.7
(22) Anmeldetag: 08.09.2004
(51) Int. Cl.: B60H 1/00, B60H 1/24

(54) **Kraftfahrzeug-Belüftungssystem**
Ventilation System for a vehicle
Système de ventilation pour véhicule

(30) Priorität: 15.09.2003 DE 10342873
(43) Veröffentlichungstag der Anmeldung: 16.03.2005
(73) Patentinhaber: Behr GmbH & Co. KG, 70469 Stuttgart (DE)
(72) Erfinder: Dieksander, Wolfgang, 70794 Filderstadt (DE); Hörig, Harald, 76476 Bischweier (DE)

(56) Entgegenhaltungen:
- EP-A- 1 059 180
- WO-A-01/40698
- DE-C- 850 116
- SE-C2- 502 376

## Beschreibung

Die Erfindung betrifft ein Kraftfahrzeug-Belüftungssystem mit Luftkanälen einer Klimaanlage, insbesondere für ein Kraftfahrzeug, gemäß dem Oberbegriff des Anspruches 1.

An Kreuzungsstellen von Luftkanälen sind häufig Umlenkungen vorgesehen, welche zur Raumersparnis des Kraftfahrzeug-Innenraums dienen. Eine derartige Anordnung von zwei sich kreuzenden Luftkanälen lässt jedoch noch Wünsche offen.

Dokument WO 01/40698 A1 offenbart ein Belüftungssystem gemäß dem Oberbegriff des Anspruchs 1.

Es ist daher Aufgabe der vorliegenden Erfindung, ein solches Belüftungssystem hinsichtlich der Luftverteilung zu verbessern.

Diese Aufgabe wird gelöst durch ein Belüftungssystem mit den Merkmalen des Anspruchs 1. Vorteilhafte Ausgestaltungen sind Gegenstand der Unteransprüche.

Erfindungsgemäß ist ein Kraftfahrzeug-Belüftungssystem, vorgesehen, bei dem sich ein erster Luftkanal und ein zweiter Luftkanal an einer Kreuzung kreuzen, wobei im Bereich der Kreuzung am ersten Luftkanal eine Luftaustrittsöffnung vorgesehen ist, durch die Luft aus dem ersten Luftkanal in den Fahrzeuginnenraum gelangen kann. Dabei endet vorzugsweise der erste Luftkanal an der Luftaustrittsöffnung. Durch eine derartige Anordnung lässt sich der Bauraumbedarf reduzieren, insbesondere in Hinblick auf die Bauhöhe. Dabei kann es sich bei den Luftkanälen um beliebige Luftkanäle handeln, beispielsweise um einen Luftkanal von einer Klimaanlage, einem Booster-Gebläse, einen Belüftungskanal, einen Entlüftungskanal.

Um einen möglichst gleichmäßigen Luftaustritt aus der Luftaustrittsöffnung zu erlangen, ist der Querschnitt des mit der Luftaustrittsöffnung versehenen ersten Luftkanals derart ausgebildet, dass er sich in Fortsetzung der Längsrichtung des Luftkanals verringert, wobei die der Luftaustrittsöffnung gegenüberliegende Wand schräg ausgebildet ist. Diese Wand ist bevorzugt eine gemeinsame Wand mit dem zweiten Luftkanal.

Der zweite Luftkanal weist vorzugsweise einen keilförmigen oder keilabschnittsförmigen Querschnitt im Bereich der Kreuzung auf. Dabei ist der zweite Luftkanal bevorzugt im Bereich der Kreuzung bogenförmig ausgebildet, wobei der spitze Teil des Keils im radial inneren Bereich der Krümmung angeordnet ist. Durch eine derartige Ausgestaltung bildet sich ein optimaler Luftströmungsverlauf im Inneren des zweiten Luftkanals aus. Ferner kann die Bauhöhe minimiert werden, so dass die Anordnung einen relativ geringen Bauraumbedarf hat.

Erfindungsgemäß ist zwischen den beiden Luftkanälen eine regelbare, verschließbare Öffnung vorgesehen, die bevorzugt durch eine Klappe verschließbar ist. Die Klappe schwenkt dabei insbesondere um eine Achse, die möglichst nahe am Ende des ersten Luftkanals angeordnet ist, so dass der Querschnittsverlust des zweiten Luftkanals gering gehalten werden kann und gleichzeitig eine einfache und günstige Umlenkung des den ersten Luftkanal durchströmenden Luftstroms möglich ist.

Zur Unterstützung der Heizung der Klimaanlage können in einem oder in beiden Luftkanälen PTC-Elemente vorgesehen sein, welche im Rahmen einer Vormontage in die Anordnung eingebracht werden, so dass eine einfache Endmontage der gesamten Baugruppe möglich ist.

Bevorzugt handelt es sich bei der Anordnung um ein Kunststoff-Spritzguss-Teil, das leicht ist und kostengünstig hergestellt werden kann. Hierbei ist der Kunststoff entsprechend den zu erwarteten Temperaturen und Belastungen in Folge von Krafteinwirkungen zu wählen.

Der bzw. die Luftkanäle können auch unterteilt ausgebildet sein, wobei insbesondere ein Kaltluftkanal neben einem Warmluftkanal angeordnet sein kann.

Im Folgenden wird die Erfindung anhand zweier Ausführungsbeispiele unter Bezugnahme auf die Zeichnung im Einzelnen erläutert. In der Zeichnung zeigen:
- Fig. 1a: eine Ansicht einer bekannten Anordnung von Luftkanälen , mit Darstellung des Luftströmungsverlaufs,
- Fig. 1b: eine andere Ansicht der Anordnung von Luftkanälen von Fig. 1a,
- Fig. 2: eine Ansicht der Anordnung von Fig. 1 a ohne Grill,
- Fig. 3: einen Schnitt in Richtung der Längsachse des ersten Luftkanals
- Fig. 4: eine Ansicht einer erfindungsgemäßen Anordnung von Luftkanälen gemäß einem Ausführungsbeispiel, mit Darstellung des Luftströmungsverlaufs,
- Fig. 5a: einen Schnitt in Richtung der Längsachse des ersten Luftkanals des Ausführungsbeispiels bei geschlossener Klappe, und
- Fig. 5b: einen Fig. 5a entsprechenden Schnitt bei offener Klappe.

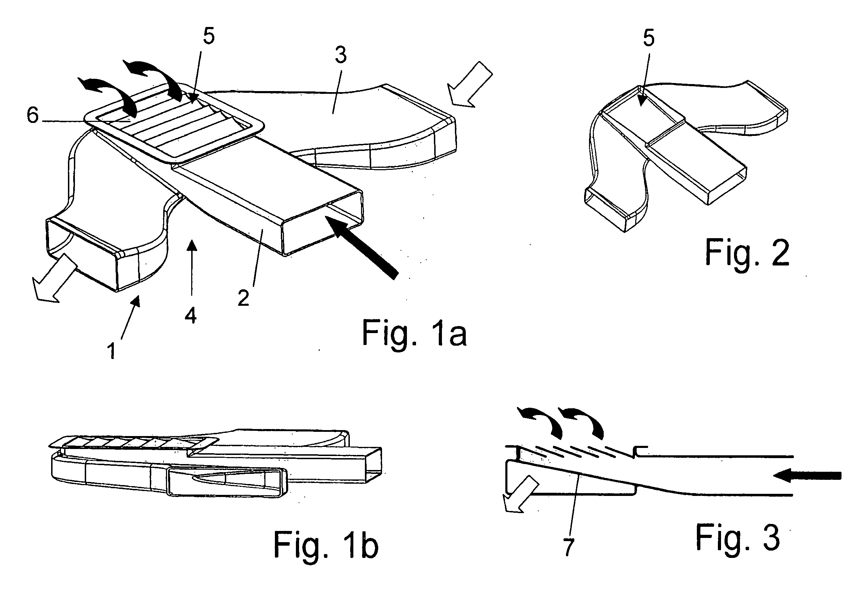

Figuren 1a bis 3 zeigen eine bekannte Anordnung 1 von Luftkanälen, wobei ein erster Luftkanal 2, der in Längsrichtung des Kraftfahrzeugs verlauft, senkrecht zu einem zweiten Luftkanal 3 angeordnet ist, der im Bereich der Kreuzung 4 einen bogenförmigen Verlauf hat, jedoch senkrecht zum ersten Luftkanal 2 angeordnet ist. Hierbei ist am ersten Luftkanal 2 eine Luftaustrittsöffnung 5, in Fig. 1 a und 1b mit Grill 6 dargestellt, vorgesehen, die im Bereich der Kreuzung 4 angeordnet ist. Wie insbesondere Fig. 3 entnommen werden kann, verläuft die der Luftaustrittsöffnung 5 gegenüberliegende Wand 7 schräg (siehe Fig. 3), so dass sich der Querschnitt des ersten Luftkanals 2 verringert und die Luft möglichst gleichmäßig über den gesamten Ausströmquerschnitt verteilt ausströmt. Da die Wand 7 gleichzeitig auch eine Wand des zweiten Luftkanals 3 ist, weist dieser im Bereich der Kreuzung 4 einen keilabschnittsförmigen Querschnitt auf. Diese Form ergibt in Verbindung mit der kurvenförmigen Ausgestaltung des zweiten Luftkanal 3 im Bereich der Kreuzung 4 eine gute Luftführung.

Die durch den ersten Luftkanal 2 strömende Luft kommt von der Front-Klimaanlage, und führt die Luft dem Fond-Fußraum zu. Die den zweiten Luftkanal 3 durchströmende Luft kommt von der Heck-Klimaanlage und die Luft wird über die C-Säule dem Dachausströmer zugeführt.

Die gesamte Anordnung 1 von Luftkanälen ist vorliegend als ein Kunststoff-Spritzguss-Teil ausgebildet.

Gemäß einer Abwandlung können in einem oder beiden Luftkanälen PTC-Heizelemente angeordnet sein, wobei diese direkt in das Kunststoff-Spritzguss-Teil integriert sind, so dass eine einzige Baugruppe vorliegt. Die PTC-Heizelemente können an den offenen Enden des Kunststoff-Spritzguss-Teils angeordnet sein, so dass eine einfache Montage derselben möglich ist.

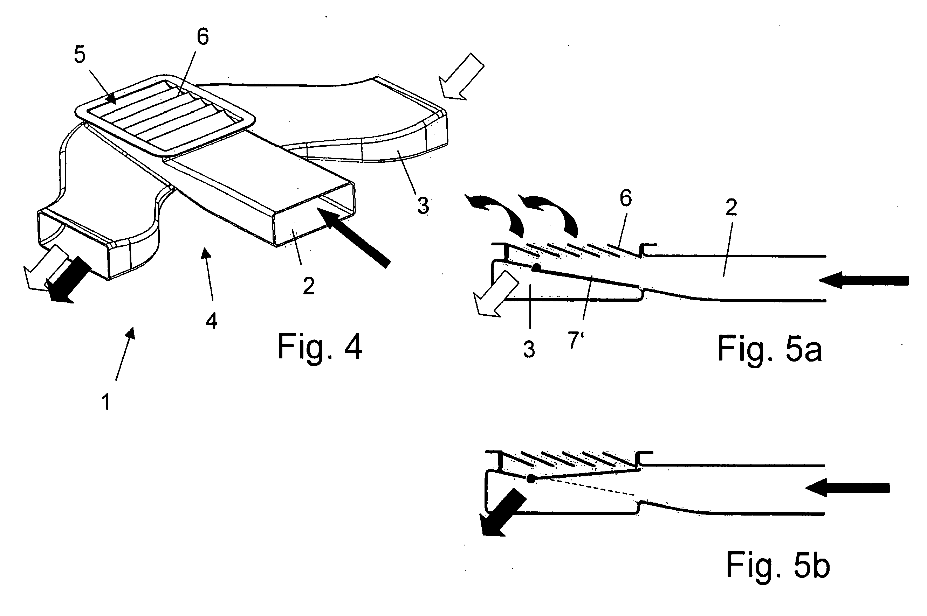

Gemäß dem in den Figuren 4, 5a und 5b dargestellten, Ausführungsbeispiel ist in bzw. anstelle der Wand 7 eine Klappe 7' vorgesehen, welche in ihrer offenen Stellung, die in Fig. 5b dargestellt ist, ein Übertreten der durch den ersten Luftkanal 2 strömenden Luft in den zweiten Luftkanal 3 ermöglicht, wobei die mit einem Grill 6 versehene Luftaustrittsöffnung 5 durch die Klappe 7' vollständig verschlossen wird, so dass die beispielsweise zum Fußausströmer geleitete Luft im Bereich der Kreuzung 4 umgeleitet wird zu einem Dachausströmer. In ihrer geschlossenen Stellung (Fig. 5a) ist die Funktion der Anordnung 1. (Fig. 1a - Fig. 3).

### Bezugszeichenliste

- 1: Anordnung
- 2: erster Luftkanals
- 3: zweiter Luftkanal
- 4: Kreuzung
- 5: Luftaustrittsöffnung
- 6: Grill
- 7: Wand
- 7': Klappe

## Patentansprüche

1. Kraftfahrzeug-Belüftungssystem, mit einem ersten Luftkanal (2) und einem zweiten Luftkanal (3) die sich an einer Kreuzung (4) kreuzen, wobei im Bereich der Kreuzung (4) am ersten Luftkanal (2) eine Luftaustrittsöffnung (5) vorgesehen ist, **dadurch gekennzeichnet, dass** zwischen den beiden Luftkanälen eine regelbare, verschließbare Öffnung vorgesehen ist.

2. Belüftungssystem nach Anspruch 1, **dadurch gekennzeichnet, dass** sich die Luftkanälen (2, 3) in einem rechten Winkel kreuzen.

3. Belüftungssystem nach einem der vorhergehenden Ansprüche, **dadurch gekennzeichnet, dass** der erste Luftkanal (2) an der Luftaustrittsöffnung (5) endet.

4. Belüftungssystem nach einem der vorhergehenden Ansprüche, **dadurch gekennzeichnet, dass** der Querschnitt des mit der Luftaustrittsöffnung (5) versehenen ersten Luftkanals (2) sich in Fortsetzung der Längsrichtung des Luftkanals (2) verringert, wobei die der Luftaustrittsöffnung (5) gegenüberliegende Wand (7) schräg ausgebildet ist.

5. Belüftungssystem nach einem der vorhergehenden Ansprüche, **dadurch gekennzeichnet, dass** der zweite Luftkanal (3) einen keilförmigen oder keilabschnittsförmigen Querschnitt im Bereich der Kreuzung (4) aufweist.

6. Belüftungssystem nach einem der vorhergehenden Ansprüche, **dadurch gekennzeichnet, dass** der zweite Luftkanal (3) im Bereich der Kreuzung (4) bogenförmig ausgebildet ist.

7. Belüftungssystem nach einem der vorhergehenden Ansprüche, **dadurch gekennzeichnet, dass** zwischen den beiden Luftkanälen (2, 3) eine Klappe (7') vorgesehen ist, die einen Teil der der Luftaustrittsöffnung (5) gegenüberliegenden Wand (7) des ersten Luftkanals (2) bildet.

8. Belüftungssystem nach einem der vorhergehenden Ansprüche nach einem der vorhergehenden Ansprüche, **dadurch gekennzeichnet, dass** mindestens ein PTC-Element in mindestens einem der Luftkanäle (2, 3) angeordnet ist.

9. Belüftungssystem nach einem der vorhergehenden Ansprüche nach einem der vorhergehenden Ansprüche, **dadurch gekennzeichnet, dass** die Anordnung (1) ein Kunststoff-Spritzguss-Teil ist.

## Claims

1. A ventilation system for a motor vehicle, comprising a first air duct (2) and a second air duct (3) crossing at an intersection (4), an air outlet opening (5) being provided in the region of the intersection (4) at the first air duct (2), **characterized in that** a controllable, closable opening is provided between the two air ducts.

2. The ventilation system according to claim 1, **characterized in that** the air ducts (2, 3) cross at a right angle.

3. A ventilation system according to any one of the preceding claims, **characterized in that** the first air duct (2) ends at the air outlet opening (5).

4. A ventilation system according to any one of the preceding claims, **characterized in that** the cross-section of the first air duct (2) provided with the air outlet opening (5) is reduced in the continuation of the longitudinal direction of the air duct (2), the wall (7) disposed opposite of the air outlet opening (5) being configured obliquely.

5. A ventilation system according to any one of the preceding claims, **characterized in that** the second air duct (3) has a wedge-shaped or wedge section-shaped cross-section in the region of the intersection (4).

6. A ventilation system according to any one of the preceding claims, **characterized in that** the second air duct (3) has an arc-shaped design in the region of the intersection (4).

7. A ventilation system according to any one of the preceding claims, **characterized in that** a flap (7') is provided between the two air ducts (2, 3), which forms part of the wall (7) of the first air duct (2) disposed opposite of the air outlet opening (5).

8. A ventilation system according to any one of the preceding claims according to any one of the preceding claims, **characterized in that** at least one PTC element is disposed in at least one of the air ducts (2, 3).

9. A ventilation system according to any one of the preceding claims according to any one of the preceding claims, **characterized in that** the assembly (1) is a plastic injection-molded part.

## Revendications

1. Système de ventilation d'un véhicule automobile, comprenant un premier conduit d'air (2) et un deuxième conduit d'air (3) qui se croisent au niveau d'une intersection (4), où il est prévu, dans la zone de l'intersection (4), une ouverture de sortie d'air (5) placée sur le premier conduit d'air (2),
**caractérisé en ce qu'**il est prévu, entre les deux conduits d'air, une ouverture réglable pouvant être fermée.

2. Système de ventilation selon la revendication 1, **caractérisé en ce que** les conduits d'air (2, 3) se croisent à angle droit.

3. Système de ventilation selon l'une ou l'autre des revendications précédentes, **caractérisé en ce que** le premier conduit d'air (2) se termine au niveau de l'ouverture de sortie d'air (5).

4. Système de ventilation selon l'une quelconque des revendications précédentes, **caractérisé en ce que** la section du premier conduit d'air (2) doté de l'ouverture de sortie d'air (5) se réduit suivant la direction longitudinale du conduit d'air (2), où la paroi (7) faisant face à l'ouverture de sortie d'air (5) est configurée de façon inclinée.

5. Système de ventilation selon l'une quelconque des revendications précédentes, **caractérisé en ce que** le deuxième conduit d'air (3), dans la zone de l'intersection (4), présente une section en forme de coin ou en forme de partie de coin.

6. Système de ventilation selon l'une quelconque des revendications précédentes, **caractérisé en ce que** le deuxième conduit d'air (3), dans la zone de l'intersection (4), est configuré en ayant une forme arquée.

7. Système de ventilation selon l'une quelconque des revendications précédentes, **caractérisé en ce qu'**il est prévu, entre les deux conduits d'air (2, 3), un volet (7') qui forme une partie de la paroi (7) du premier conduit d'air (2), faisant face à l'ouverture de sortie d'air (5).

8. Système de ventilation selon l'une quelconque des revendications précédentes, **caractérisé en ce qu'**au moins un élément à coefficient de température positif (CTP) est disposé dans au moins l'un des conduits d'air (2, 3).

9. Système de ventilation selon l'une quelconque des revendications précédentes, **caractérisé en ce que** le dispositif (1) est une pièce en matière plastique moulée par injection.
